(19) Europäisches Patentamt
European Patent Office
Office européen des brevets

(11) **EP 4 765 557 A1**

(12) **EUROPEAN PATENT APPLICATION**

(43) Date of publication:
**24.06.2026 Bulletin 2026/26**

(21) Application number: **24222938.3**

(22) Date of filing: **23.12.2024**

(51) International Patent Classification (IPC):
**H02J 7/00** (2026.01)

(52) Cooperative Patent Classification (CPC):
**H02J 7/933; H02J 7/47; H02J 7/92; H02J 7/927; H02J 7/94;** H02J 7/971

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Wong, Cheng Eng**
**Singapore 579723 (SG)**

(72) Inventor: **Peng, Haifan**
**579723 Singapore (SG)**

(74) Representative: **Dehns**
**10 Old Bailey**
**London EC4M 7NG (GB)**

(54) **CHARGING CONTROL METHOD AND CHARGING DEVICE**

(57) The present application provides a charging control method and a charging device. The charging control method comprises: acquiring a maximum charging power for protocol handshaking with a target device, and determining a target power supply mode for the target device; and charging, when the target power supply mode is a first protecting mode, the target device with a first charging power and a second charging power alternately; wherein the first charging power is less than or equal to the maximum charging power; and the second charging power is less than the first charging power. By providing a charging mode of charging a device with a high power and a low power alternately, a user is allowed to select the charging mode under a particular usage scenario to meet the demand for battery protection.

Acquiring a maximum charging power for protocol handshaking with a target device, and determining a target power supply mode for the target device — S110

Charging, when the target power supply mode is a first protecting mode, the target device with alternating first charging power and second charging power; wherein the first charging power is less than or equal to the maximum charging power; and the second charging power is less than the first charging power — S120

Fig. 1

EP 4 765 557 A1

**Description**

**CROSS REFERENCE TO RELATED APPLICATIONS**

The present application claims the benefit of Chinese Patent Application No.202411596241.7 filed on November 11, 2024, the contents of which are incorporated herein by reference in their entirety.

**TECHNICAL FIELD**

The present application relates to the technical field of charging control, and in particular to a charging control method and a charging device.

**BACKGROUND**

At present, consumer electronics (e.g., smart phones, tablets and laptops) are usually powered using lithium batteries. In order to meet the user's demand for fast charging, various standard organizations and manufacturers have promoted a plurality of charging protocols, such as a USB Power Delivery (USB PD) protocol formulated by a USB Implementers Forum (USB-IF) organization, and a Quick Charge (QC) protocol and a Pump Express (PE) protocol formulated by other manufacturers. These protocols tend to increase the charging voltage and current to achieve higher charging power, thereby shortening the charging time and improving the user's experience.

At present, the USB PD protocol has evolved to version 3.1, and its maximum allowable charging power has reached 240W (48V/5A), which is significantly improved compared with the 5V/1.5A in the specification of BC 1.2. However, a significant problem brought by fast charging with a high power is that more heat can be generated by the lithium battery while being charged, and the excessive heat generation will accelerate the aging of the lithium battery, shorten the service life thereof, and potentially lead to a waste of raw materials and environmental pollution.

In order to deal with this problem, many manufacturers have employed, while designing a charging system, such a compromise solution that: if the battery power is low, a fast charging will be carried out with a highest power for protocol handshake, and if the battery power reaches a certain level, a gradual reduction will be carried out to the charging voltage and current. While this method reduces the heat of the battery to a certain extent, it cannot provide the battery protection maximally, since the continuous high power state in the early stage can still result in unnecessary temperature rise.

**SUMMARY**

In view of the above-mentioned problems, the present application is proposed in order to provide a charging control method and a charging device for overcoming or at least partially solving the problems, including:

a charging control method, includes:

acquiring a maximum charging power for protocol handshaking with a target device, and determining a target power supply mode for the target device; and

charging, when the target power supply mode is a first protecting mode, the target device with a first charging power and a second charging power alternately; where the first charging power is less than or equal to the maximum charging power; and the second charging power is less than the first charging power.

Preferably, the method further includes:

charging, when the target power supply mode is a default charging mode, the target device with the continuous maximum charging power; and

charging, when the target power supply mode is a second protecting mode, the target device with a continuous third charging power; where the third charging power is less than the maximum charging power.

Preferably, an initial value of the target power supply mode is the default charging mode; and determining the target power supply mode for the target device includes:

setting the target power supply mode as the first protecting mode upon receiving a first selection instruction;

setting the target power supply mode as the second protecting mode upon receiving a second selection instruction;

setting the target power supply mode as the default charging mode upon receiving a first cancellation instruction for the first selection instruction; and

setting the target power supply mode as the default charging mode upon receiving a second cancellation instruction for the second selection instruction.

Preferably, determining the target power supply mode for the target device includes:

acquiring, when the target device is being charged, an interface output power of a connector, and recording, within a preset duration, a duration in which the interface output power is less than or equal to a minimum output power; and

setting, when the duration is greater than the preset duration, the target power supply mode as the default power supply mode.

Preferably, the method further includes:

making, when the target power supply mode is the default charging mode, a first interactive feedback;

making, when the target power supply mode is the first protecting mode, a second interactive feedback; and

making, when the target power supply mode is the second protecting mode, a third interactive feedback.

A charging device, includes: a charging protocol controller, a boost-buck regulator and a connector; where:

the boost-buck regulator is respectively connected with an input power source, the charging protocol controller and the connector, and is configured to adjust and output to a target device through the connector, voltage and current of the input power source under the control of the charging protocol controller;

the charging protocol controller is connected with the target device through the connector, and is configured to acquire a maximum charging power for protocol handshaking with the target device through the connector, and determine a target power supply mode for the target device; and

the charging protocol controller is configured to control, when the target power supply mode is a first protecting mode, the boost-buck regulator to charge the target device with a first charging power and a second charging power alternately; where the first charging power is less than or equal to the maximum charging power; and the second charging power is less than the first charging power.

Preferably, the charging protocol controller is configured to control, when the target power supply mode is a default charging mode, the boost-buck regulator to charge the target device with the continuous maximum charging power; and
the charging protocol controller is configured to control, when the target power supply mode is a second protecting mode, the boost-buck regulator to charge the target device with a continuous third charging power; where the third charging power is less than the maximum charging power.
Preferably, an initial value of the target power supply mode is the default charging mode; the device further includes an interactive unit and a microprocessor; the microprocessor is respectively connected with the interactive unit and the charging protocol controller;

the microprocessor is configured to send, upon receiving a first selection instruction from the interactive unit, a first protection notice to the charging protocol controller, and the charging protocol controller is configured to set the target power supply mode as a first protecting mode;

the microprocessor is configured to send, upon receiving a second selection instruction from the interactive unit, a second protection notice to the charging protocol controller, and the charging protocol controller is configured to set the target power supply mode as a second protecting mode;

the microprocessor is configured to send, upon receiving a first cancellation instruction for the first selection instruction from the interactive unit, a first cancellation notice to the charging protocol controller, and the charging protocol controller is configured to set the target power supply mode as the default charging mode; and

the microprocessor is configured to send, upon receiving a second cancellation instruction for the second selection instruction from the interactive unit, a second cancellation notice to the charging protocol controller, and the charging protocol controller is configured to set the target power supply mode as the default charging mode.

Preferably, the charging protocol controller is configured to acquire and send to the microprocessor, when the target device is being charged, an interface output power of the connector, and the microprocessor is configured to record, within a preset duration, a duration in which the interface output power is less than or equal to a minimum output power; and the microprocessor is configured to send, when the duration is greater than the preset duration, a default power supply notice to the charging protocol controller, and the charging protocol controller is configured to set the target power supply mode as the default power supply mode.

Preferably, the charging device further includes an interactive feedback unit; the microprocessor is connected with the interactive feedback unit;

the microprocessor is configured to control, when the target power supply mode is the default charging mode, the interactive feedback unit to make a first interactive feedback;

the microprocessor is configured to control, when the target power supply mode is the first protecting mode, the interactive feedback unit to make a second interactive feedback; and

the microprocessor is configured to control, when the target power supply mode is the second protecting mode, the interactive feedback unit to make a third interactive feedback.

The present application has the advantages as follows:
with regard to the problem that the existing charging methods cannot provide battery protection to the maximum, the present application provides a solution that allows to charge a device with a high power and a low power alternately, specifically: acquiring a maximum charging power for protocol handshaking with a target device, and determining a target power supply mode for the target device; and charging, when the target power supply mode is a first protecting mode, the target device with a first charging power and a second charging power alternately; where the first charging power is less than or equal to the maximum charging power; and the second charging power is less than the first charging power.

By providing a charging mode of charging a device with a high power and a low power alternately, a user is allowed to select the charging mode under a particular usage scenario to meet the demand for battery protection.

## BRIEF DESCRIPTION OF DRAWINGS

In order to illustrate the technical solution of the present application more clearly, a brief introduction will be made below to the drawings needed to be used in the description of the present application. Obviously, the drawings in the following description are only a part of the embodiments of the present application, and according to such drawings, other drawings can be obtained for those ordinary skilled in the art without paying creative labor.

Fig. 1 is a flowchart of steps of a first part of a charging control method according to an embodiment of the present application;

Fig. 2 is a flowchart of steps of a second part of a charging control method according to an embodiment of the present application;

Fig. 3 is a structural block diagram of a charging device according to an embodiment of the present application;

Fig. 4 is a first flow diagram of a charging control method according to a specific implementation of the present application; and

Fig. 5 is a second flow diagram of the charging control method according to a specific implementation of the present application.

The reference numerals in the drawings of the specification are as follows:
01: Charging Protocol Controller; 02: Boost-Buck Regulator; 03: Connector; 04: Interactive Unit; 05: Microprocessor; and 06: Interactive Feedback Unit.

**DETAILED DESCRIPTION**

In order to make the objectives, features and advantages of the present application more obvious and easier to understand, a further description will be made in detail to the present application in connection with the drawings and the detailed description. Obviously, the described embodiment is a part of the embodiments of the present application, not all of the embodiments. Based on the embodiments in the present application, all the other embodiments obtained by those ordinary skilled in the art without paying creative labor belong to the protection scope of the present application.

By analyzing the prior art, the inventor(s) found that the user usually charges a device at night, in which case sufficient charging time makes the ability of fast charging not indispensable. However, a conventional charging device may automatically select the maximum supported power to charge while carrying out a charging protocol handshake, which lacks the flexibility for the user to select an appropriate charging power by himself/herself. Therefore, it is a reasonable and effective strategy to allow the user to employ a continuous low power or an intermittent power in the case that there is plenty of time, such as at night, to reduce the temperature rise and prolong the battery life.

It should be noted that in any of the embodiments of the present application, the method and the device are applied to charging or supplying power to a target device, which is provided with a battery component for storing and providing electric energy, and the battery component includes at least one of a lithium-ion battery, a nickel-hydrogen battery and a nickelcadmium battery, and preferably, a lithium-ion battery.

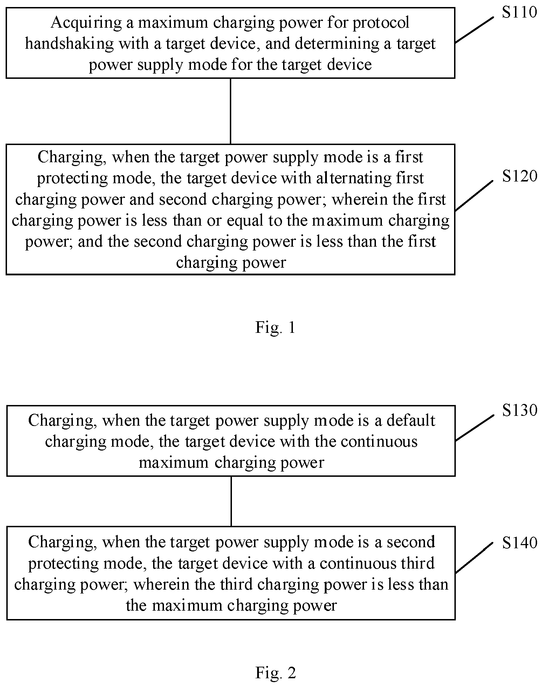

Referring to Fig. 1, in an embodiment of the present application, a charging control method is provided, including:

S110: acquiring a maximum charging power for protocol handshaking with a target device, and determining a target power supply mode for the target device; and

S120: charging, when the target power supply mode is a first protecting mode, the target device with a first charging power and a second charging power alternately; where the first charging power is less than or equal to the maximum charging power; and the second charging power is less than the first charging power.

By providing a charging mode of charging a device with a high power and a low power alternately, a user is allowed to select the charging mode under a particular usage scenario to meet the demand for battery protection.

Next, a further illustration will be made to the charging control method in this exemplary embodiment.

As described in the step S110, the maximum charging power for protocol handshaking with the target device is acquired, and the target power supply mode for the target device is determined.

By communicating with the target device (i.e., by protocol handshaking), the maximum charging power that can be provided by the charging device and can be accepted by the target device, as well as its corresponding maximum charging voltage and maximum charging current, are identified. Specifically, the charging protocols supported by the target device (e.g., USB PD, QC, etc.) are detected and the maximum charging voltage and maximum charging current corresponding to the maximum charging power are determined.

The target power supply mode is determined according to the user's instruction or the current situation; where the target power supply mode includes a default charging mode (i.e., continuously using the maximum charging power to quickly replenish the electric energy), a first protecting mode (i.e., alternately using two different charging powers to reduce heat generation) and a second protecting mode (i.e., continuously using a lower charging power to reduce heat generation).

As an example, by protocol handshaking with a certain smart phone, the maximum charging power that it supports is identified as 45W (15V/3A). The target power supply mode includes the default charging mode, the first protecting mode and the second protecting mode, where the initial value (i.e., default option) is the default charging mode.

As described in the step S120, when the target power supply mode is the first protecting mode, the target device is charged with a first charging power and a second charging power alternately; where the first charging power is less than or equal to the maximum charging power; the second charging power is less than the first charging power.

When the target power supply mode is the first protecting mode, the target device is charged with a first charging voltage and a first charging current corresponding to the first charging power, and a second charging voltage and a second charging current corresponding to the second charging power, alternately; where the first charging power is less than or equal to the maximum charging power; and the second charging power is smaller than the first charging power, and is used for reducing the overall heat.

As an example, the maximum charging power for the target device is 45W (15V/3A), and the target power supply mode is the first protecting mode, then the device is charged with 7.5W (5V/1.5A) as the first charging power and 5W (5V/1A) as the second charging power alternately. In each cycle, the device is charged with a higher power for 30 seconds and then switches to be charged with a lower power for 1 minute.

As another example, the maximum charging power for the target device is 45W (15V/3A), and the target power supply mode is the first protecting mode, then the device is charged with 7.5W (5V/1.5A) as the first charging power and 0W (0V/0A) as the second charging power (i.e., no power supply) alternately. In each cycle, the device is charged with a higher power for 20 seconds and then switches to a rest state for 3 minutes.

Referring to Fig. 2, in an embodiment of the present application, the method further includes:

S130: charging, when the target power supply mode is a default charging mode, the target device with the continuous maximum charging power; and

S140: charging, when the target power supply mode is a second protecting mode, the target device with a continuous third charging power; where the third charging power is less than the maximum charging power.

By adding two additional protecting modes on the basis of the default charging mode, not only the existing charging specifications are supported, but also a charging mode for charging a device with a continuous low power or with a high power and a low power alternately is provided, allowing different charging modes to be selected under different usage scenarios to meet the demand for fast charging or battery protection.

Next, a further illustration will be made to the charging control method in this exemplary embodiment.

As described in the step S130, when the target power supply mode is the default charging mode, the target device is charged with the continuous maximum charging power.

When the target power supply mode is the default charging mode, the target device is charged continuously with the maximum charging voltage and maximum charging current corresponding to the maximum charging power.

As an example, the maximum charging power for the target device is 45W (15V/3A), and the target power supply mode is the default charging mode, then the device is charged continuously with 45W (15V/3A).

As described in the step S140, when the target power supply mode is the second protecting mode, the target device is charged with the continuous third charging power; where the third charging power is less than the maximum charging power.

When the target power supply mode is the second protecting mode, the target device is charged continuously with a third charging voltage and a third charging current corresponding to the third charging power; where the third charging power is less than the maximum charging power, and is used for reducing heat.

As an example, the maximum charging power for the target device is 45W (15V/3A), and the target power supply mode is the second protecting mode, then the device is charged continuously with 5W (5V/1A) as the third charging power.

In an embodiment of the present application, an initial value of the target power supply mode is the default charging mode; and the step of determining the target power supply mode for the target device includes:

setting the target power supply mode as the first protecting mode upon receiving a first selection instruction;

setting the target power supply mode as the second protecting mode upon receiving a second selection instruction;

setting the target power supply mode as the default charging mode upon receiving a first cancellation instruction for the first selection instruction; and

setting the target power supply mode as the default charging mode upon receiving a second cancellation instruction for the second selection instruction.

It should be noted that the above instructions are each sent out through the user's operation on an interactive unit (e.g., by pressing a button, touching a display screen or filling in application program options, etc.). As an example, the user sends out the first selection instruction by double-clicking a physical button on a charger for an odd number of times, and sends out the first cancellation instruction by double-clicking the physical button on the charger for an even number of times; and sends out the second selection instruction by pressing the physical button on the charger for 2 seconds for an odd number of times, and sends out the second cancellation instruction by pressing the physical button on the charger for 2 seconds for an even number of times.

This method, which takes the default charging mode as the initial value of the target power supply mode, can meet the demand for fast charging without receiving the user's instruction and meet the demand for battery protection after receiving the user's instruction.

In another embodiment of the present application, the step of determining the target power supply mode for the target device includes:

acquiring a current time, and determining the initial value of the target power supply mode according to the current time;

setting the target power supply mode as a default charging mode upon receiving a default selection instruction;

setting the target power supply mode as the first protecting mode upon receiving a first selection instruction;

setting the target power supply mode as the second protecting mode upon receiving a second selection instruction;

setting the target power supply mode as the initial value of the target power supply mode upon receiving a default cancellation instruction for the default selection instruction;

setting the target power supply mode as the default charging mode upon receiving a first cancellation instruction for the first selection instruction; and

setting the target power supply mode as the default charging mode upon receiving a second cancellation instruction for the second selection instruction.

Specifically, the current time is detected through a built-in clock; and if the current time is within a first period, the initial value of the target power supply mode is set as the default charging mode; if the current time is within a second period, the initial value of the target power supply mode is set as the first protecting mode; or if the current time is within a third period, the initial value of the target power supply mode is set as the second protecting mode; where the first period, the second period and the third period respectively correspond to different periods of day, and constitute a total period of a day.

As an example, the current time is acquired through the built-in clock; and if the current time is from 08:00 to 22:00 (excluding the starting value), the initial value of the target power supply mode is set as the default charging mode; if the current time is from 22:00 to 06:00 (excluding the starting value), the initial value of the target power supply mode is set as the first protecting mode; or if the current time is from 06:00 to 08:00 (excluding the starting value), the initial value of the target power supply mode is set as the second protecting mode.

This method, which combines intelligent setting by the system and active selection by the user, can manage the charging process more efficiently and intelligently, improving the user's experience and optimizing the battery's health.

In another embodiment of the present application, the step of determining the target power supply mode for the target device includes:

acquiring a total charging time T set by the user and an energy E required to fully charge the battery (which can be acquired by the battery management system); setting, if the energy E required to fully charge the battery is less than a product of the total charging time T set by the user and the maximum charging power $P_{max}$ (i.e., $E < T \times P_{max}$), the target power supply mode as the first protecting mode or the second protecting mode; or setting, if not so, the target power supply mode as the default charging mode; and for both protecting modes, it is also required to set the charging plan according to the actual situation:

For the first protecting mode, the first charging power $P_1$, the second charging power $P_2$, a first unit duration $t_1$ for the first charging power and a second unit duration $t_2$ for the second charging power are determined according to the method as described below:

The average power for the energy E required to fully charge the battery within the total charging time T is calculated as: $P_{average} = \dfrac{E}{T}$ .

$P_1 = k \times P_{average}$; where k is a predefined coefficient, and the value it takes is greater than 1 and less than or equal to $\dfrac{P_{max}}{P_{average}}$ (e.g., the smaller one among any value in the range of (1, 1.3] and $\dfrac{P_{max}}{P_{average}}$ ), so as to ensure that the first charging power $P_1$ will not exceed the maximum charging power $\dfrac{P_{max}}{P_{average}}$ , while accelerating the charging moderately;

$P_2 = m \times P_{average}$; where m is a predefined coefficient, and the value it takes is less than 1 (e.g., 0 to 0.5), which can reduce the power as much as possible to allow an adequate heat dissipation for the battery and the device;

According to the requirement for the power: $\dfrac{P_1 \times t_1 + P_2 \times t_2}{t_1 + t_2} = P_{average}$ ;

It is derived that: $t_1 = r \cdot t_2 = \dfrac{1-m}{k-1} \cdot t_2$ ; where r is the ratio of $t_1$ to $t_2$, r = 1-m k-1'

According to the requirement for the time: $n(t_1 + t_2) = T$; where n is the predefined number of cycles, and the value it takes is an integer greater than or equal to 1 (e.g., an integer from 10 to 20); or, n is positively correlated with the numerical value of T (e.g., $n = \alpha \cdot T$, $\alpha = \dfrac{10}{3\,\mathrm{h}}$), and the cycle may be reasonably divided to ensure timely heat dissipation;

It is derived that: $t_1 = \dfrac{r}{r+1} \cdot \dfrac{T}{n} = \dfrac{1-m}{(1-m)+(k-1)} \cdot \dfrac{T}{n}$; $t_2 = \dfrac{1}{r+1} \cdot \dfrac{T}{n} = \dfrac{k-1}{(1-m)+(k-1)} \cdot \dfrac{T}{n}$.

As an example, the maximum charging power is derived as $P_{max}$=50w; the total charging time is T=3 hours, and it will take a total energy of E=100W·h to fully charge the battery; then $P_{average} = \dfrac{E}{T} = \dfrac{100}{3}W$;

It is predefined that k=1.2, m=0.6, n=10; then:

$$P_1 = k \times P_{average} = 1.2 \times \frac{100}{3} = 40W;$$

$$P_2 = m \times P_{average} = 0.6 \times \frac{100}{3}W = 20W;$$

$$t_1 = \frac{1-m}{(1-m)+(k-1)} \cdot \frac{T}{n} = \frac{1-0.6}{(1-0.6)+(1.2-1)} \cdot \frac{3}{10} = 0.2 \text{ hours};$$

$$t_2 = \frac{k-1}{(1-m)+(k-1)} \cdot \frac{T}{n} = \frac{1.2-1}{(1-0.6)+(1.2-1)} \cdot \frac{3}{10} = 0.1 \text{ hours}.$$

For the second protecting mode, the third charging power $P_3$ is determined according to the method as described below:

The average power for the energy E required to fully charge the battery within the total charging time T is calculated as: $P_{average} = \dfrac{E}{T}$.

$$P_3 = P_{average}.$$

As an example, the maximum charging power is derived as $P_{max}$=50W; the total charging time is T=3 hours, and it will take a total energy of E=100W•h to fully charge the battery; then $P_{average} = \dfrac{E}{T} = \dfrac{100}{3}W$;

$$P_3 = P_{average} = \frac{100}{3}W.$$

Through the method as described above, the user can set the total charging time according to his/her own needs or the specific situation, and the system can intelligently adjust the charging plan to ensure that the battery can be basically fully charged or can be charged as much as possible within the time set by the user, while thoroughly taking the demand for battery protection into account.

In an embodiment of the present application, the step of determining the target power supply mode for the target device includes:

acquiring, when the target device is being charged, an interface output power of a connector, and recording, within a preset duration, a duration in which the interface output power is less than or equal to a minimum output power;

recording, when the duration is less than or equal to the preset duration, the battery state of the target device as a charging state; and

recording, when the duration is greater than the preset duration, the battery state of the target device as a fully charged state, and setting the target power supply mode as the default power supply mode.

As an example, the preset duration is 120 seconds, and the minimum output power is 1W.

By continuously monitoring the interface output power of the connector during the charging process, estimating the charging condition of the battery according to this data, and after the battery is recorded as the fully charged state, automatically adjusting to the default power supply mode (i.e., bypass power supply mode) instead of the charging mode, a damage to the battery due to a continuation of charging after being fully charged can be avoided.

In an embodiment of the present application, the method further includes:

making, when the target power supply mode is the default charging mode, a first interactive feedback;

making, when the target power supply mode is the first protecting mode, a second interactive feedback; and

making, when the target power supply mode is the second protecting mode, a third interactive feedback.

It should be noted that the above interactive feedback (e.g., a lighting, a sound or a screen display, etc.) is sent out by controlling an interactive feedback unit to generate audiovisual content. As an example, when the target power supply mode is the default charging mode, a blue lighting is sent out; when the target power supply mode is the first protecting mode, a yellow lighting is sent out; and when the target power supply mode is the second protecting mode, a green lighting is sent out.

Through the interactive feedback mechanism, the current state of power supply mode can be conveyed to the user. Such design improves the user's experience and enables the user to clearly understand the charging process and make adjustments as needed.

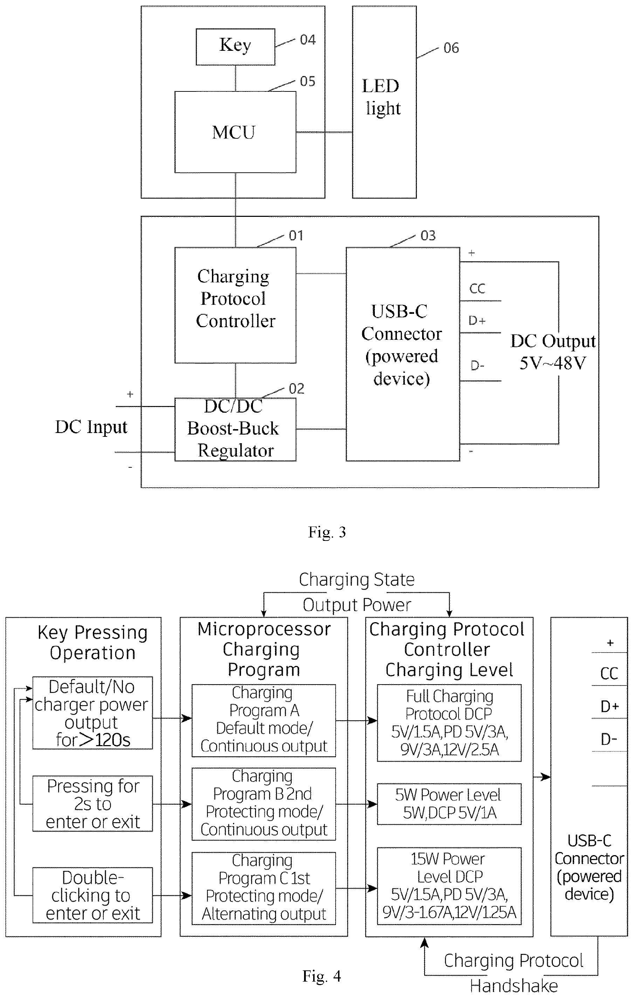

Referring to Fig. 3, in an embodiment of the present application, a charging device is further provided, including: a charging protocol controller 01, a boost-buck regulator 02 and a connector 03; where:

the boost-buck regulator 02 is respectively connected with an input power source, the charging protocol controller 01 and the connector 03, and is configured to adjust and output to a target device through the connector 03, voltage and current of the input power source under the control of the charging protocol controller 01;

the charging protocol controller 01 is connected with the target device through the connector 03, and is configured to acquire a maximum charging power for protocol handshaking with the target device through the connector 03, and determine a target power supply mode for the target device; and

the charging protocol controller 01 is configured to control, when the target power supply mode is a first protecting mode, the boost-buck regulator 02 to charge the target device with a first charging power and a second charging power alternately; where the first charging power is less than or equal to the maximum charging power; and the second charging power is less than the first charging power.

In an embodiment of the present application, the charging protocol controller 01 is configured to control, when the target power supply mode is a default charging mode, the boost-buck regulator 02 to charge the target device with the continuous maximum charging power; and

the charging protocol controller 01 is configured to control, when the target power supply mode is a second protecting mode, the boost-buck regulator 02 to charge the target device with a continuous third charging power; where the third charging power is less than the maximum charging power.

In an embodiment of the present application, an initial value of the target power supply mode is the default charging mode; the device further includes an interactive unit 04 and a microprocessor 05; the microprocessor 05 is respectively connected with the interactive unit 04 and the charging protocol controller 01;

the microprocessor 05 is configured to send, upon receiving a first selection instruction from the interactive unit 04, a first protection notice to the charging protocol controller 01, and the charging protocol controller 01 is configured to set the target power supply mode as a first protecting mode;

the microprocessor 05 is configured to send, upon receiving a second selection instruction from the interactive unit 04, a second protection notice to the charging protocol controller 01, and the charging protocol controller 01 is configured to set the target power supply mode as a second protecting mode;

the microprocessor 05 is configured to send, upon receiving a first cancellation instruction for the first selection instruction from the interactive unit 04, a first cancellation notice to the charging protocol controller 01, and the charging protocol controller 01 is configured to set the target power supply mode as the default charging mode; and

the microprocessor 05 is configured to send, upon receiving a second cancellation instruction for the second selection instruction from the interactive unit 04, a second cancellation notice to the charging protocol controller 01, and the charging protocol controller 01 is configured to set the target power supply mode as the default charging mode.

In an embodiment of the present application, the charging protocol controller 01 is configured to acquire and send to the microprocessor 05, when the target device is being charged, an interface output power of the connector 03, and the microprocessor 05 is configured to record, within a preset duration, a duration in which the interface output power is less than or equal to a minimum output power; and

the microprocessor 05 is configured to send, when the duration is greater than the preset duration, a default power supply notice to the charging protocol controller 01, and the charging protocol controller 01 is configured to set the target power supply mode as the default power supply mode.

In an embodiment of the present application, the device further includes an interactive feedback unit 06; the microprocessor 05 is connected with the interactive feedback unit 06;

the microprocessor 05 is configured to control, when the target power supply mode is the default charging mode, the interactive feedback unit 06 to make a first interactive feedback;

the microprocessor 05 is configured to control, when the target power supply mode is the first protecting mode, the interactive feedback unit 06 to make a second interactive feedback; and

the microprocessor 05 is configured to control, when the target power supply mode is the second protecting mode, the interactive feedback unit 06 to make a third interactive feedback.

Since the unit embodiment is very similar to the method embodiment, the description thereof is relatively simple, and reference can be made to the description of the method embodiment in terms of the relevance.

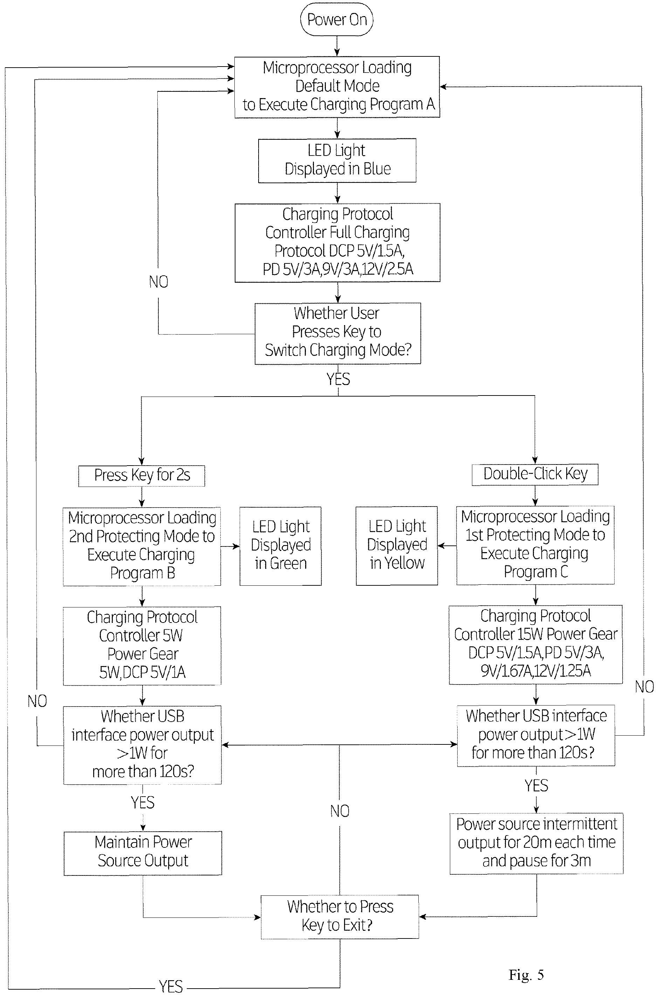

Referring to Figs. 4 and 5, in a specific implementation of the present application, the microprocessor 05 has three kinds of charging programs built in.

Charging program A, which is the default mode for the charger, refers to the default state when the charger stands by after being powered on, or the state to which the charger automatically returns due to the interface output power of the charger being less than or equal to 1W for 120 seconds (i.e., the battery is fully charged). This charging program corresponds to a full charging protocol level among the charging levels of the microprocessor 05, which are also all the supportable charging protocols of the charger and the corresponding voltages/currents. If the charging mode of charging program A is being executed, the charging protocol controller 01 will carry out a charging protocol handshake with the device connected to the USB C interface with the full charging protocol level, in which case the LED light may be displayed in blue, and at the beginning of charging, the charger may output power source continuously without interrupting itself, until the charged device is fully charged.

Charging program B can only be activated by means of an operation of pressing a key switch for 2 seconds, in which case the microprocessor 05 may start to execute charging program B, and the LED light may be set as green. This charging program corresponds to a 5W charging level among the charging levels of the charging protocol controller 01. This level is referred to as the second protecting mode in the above embodiments, and the main principle thereof is to forcibly lock the feasible handshake protocol of the charging protocol controller 01 to be at DCP, so that the device can only handshake with the charger with a voltage of 5V, a maximum current of 1A and a maximum power of 5W, in which case the battery temperature while being charged of most mobile cellphones, tablets and notebooks may be greatly reduced, so that the lithium battery's temperature will always be kept at a low level, and after the beginning of charging, the charger will monitor the numerical value of charging power of the battery and continuously output power source without interrupting itself, until the charged device is fully charged.

Charging program C can only be activated by means of an operation of double-clicking a key switch, in which case the microprocessor 05 may start to execute charging program C, and the LED light may be set as yellow. This charging program corresponds to a 15W charging level among the charging levels of the charging protocol controller 01. This level is referred to as the first protecting mode in the above embodiments, and the main principle thereof is to made adjustment to the feasible handshake protocol of the charging protocol controller 01 to remove 15V voltage level, so that the total power of the charger is limited to be within 15W. The charging program has built in a program that intermittently output power source, in which if outputting power source for more than a certain time, the charger will stop for a certain time and then continue to output power source. The purpose of such design is to make the device gain a higher power when the battery is being charged, while being able to prevent the battery temperature from rising due to being charged for a long time.

The charger can be powered on without any additional operation, in which case the microprocessor 05 of the charger may automatically load the default mode to execute charging program A, and the LED indicator light may be displayed in blue. In this case, the charging level of the charging protocol controller 01 of the charger is at the full charging protocol level. At this time, if there is a device connected to the USB-C interface of the charger, a handshake with the device will be carried out with the charging voltage/current provided by the full charging protocol, so as to agree on the final voltage/current.

The microprocessor 05 will monitor whether the user presses the key to switch the charging mode after being powered on. If the user presses the key for 2 seconds, the microprocessor 05 will load the second protecting mode to execute charging program B, and the LED indicator will be displayed in green. The microprocessor 05 will send an instruction to the charging protocol controller 01 through I2C, so that the charging protocol controller 01 is changed to the 5W charging level, in which case the charging protocol handshake between the device and the charger may only be carried out with the DCP protocol, eventually outputting a voltage of 5V/a maximum current of 1A.

In the case of charging in the second protecting mode, the charging protocol controller 01 will send the real-time data of the output voltage/current to the microprocessor 05 for estimate through I2C. If the interface output power of the USB-C is greater than 1W, the charging program will not change, and the power supply will be continuously output until the interface output power of the USB-C is less than or equal to 1W. Then, the microprocessor 05 will start a timer, and if the timer lasts more than 120 seconds, the microprocessor 05 will change the charging program, or the user will actively press the key to request to exit, in which case the microprocessor 05 may reload the default mode to execute charging program A.

If the user double-clicks the key, the microprocessor 05 will load the first protecting mode to execute charging program C, and the LED indicator will be displayed in yellow. The microprocessor 05 will send an instruction to the charging protocol controller 01 through I2C, so that the charging protocol controller 01 is changed to the 15W charging level, in which case when the device carries out a charging protocol handshake with the charger, the charging voltage/current can only be selected from the voltage/current options supported in the 15W charging level.

In the case of charging in the first protecting mode, the charging protocol controller 01 will send the real-time data of the output voltage/current to the microprocessor 05 for estimate through I2C. If the interface power output of the USB-C is greater than 1W, the charging program will not change, in which case the power source is in an intermittent output state where for each time, after outputting for 20 minutes, the charger may actively stop outputting power source temporarily through the charging protocol and the switch in the DC-DC power control module, and then power on again after 3 minutes, until the interface power output of the USB-C is less than or equal to 1W. Then, the microprocessor 05 will start a timer, and if the timer lasts more than 120 seconds, the microprocessor 05 will change the charging program, or the user will actively press the key to request to exit, in which case the microprocessor 05 may reload the default mode to execute charging program A.

It should be noted that the above embodiments are each described in a progressive way, and each of the embodiments focuses on the differences from the other embodiments, so reference can be made to the like and similar parts among various embodiments.

Although the preferred embodiments of the present application have been described, those skilled in the art can make additional alterations and modifications to these embodiments once they learn the basic inventive concepts. Therefore, the interpretation of the appended claims includes the preferred embodiments and all the alterations and modifications that fall within the scope of the embodiments of the present application.

Finally, it should be noted that in this specification, relational terms such as "first" and "second" are merely used to distinguish one entity or operation from another, and do not necessarily require or imply that there is any such actual relationship or order between these entities or operations. Moreover, the terms such as "including", "containing" or any other variation thereof are intended to cover non-exclusive inclusion, so that a process, method, article or terminal device including a series of elements includes not only such elements, but also other elements not explicitly listed or the elements inherent to such process, method, article or terminal device. Without more restrictions, an element defined by a phrase of "including one..." does not exclude that there are other identical elements in the process, method, article or terminal device including the said element.

A detailed introduction has been made above to the charging control method and charging device provided by the present application, and the principle and implementation of the present application are set forth by applying specific embodiments in this specification. The illustration of the above embodiments is only used to help understand the method of the present application and its core idea. Meanwhile, for those ordinary skilled in the art, according to the idea of the present application, there will be changes in the specific implementation and application scope. In summary, the contents of this specification should not be construed as limiting the present application.

**Claims**

1. A charging control method, comprising:

   acquiring a maximum charging power for protocol handshaking with a target device, and determining a target power supply mode for the target device; and
   charging, when the target power supply mode is a first protecting mode, the target device with a first charging power and a second charging power alternately; wherein the first charging power is less than or equal to the maximum charging power; and the second charging power is less than the first charging power.

2. The method according to claim 1, further comprising:

   charging, when the target power supply mode is a default charging mode, the target device with the continuous maximum charging power; and
   charging, when the target power supply mode is a second protecting mode, the target device with a continuous third charging power; wherein the third charging power is less than the maximum charging power.

3. The method according to claim 2, wherein an initial value of the target power supply mode is the default charging mode; and the step of determining the target power supply mode for the target device comprises:

   setting the target power supply mode as the first protecting mode upon receiving a first selection instruction;
   setting the target power supply mode as the second protecting mode upon receiving a second selection instruction;
   setting the target power supply mode as the default charging mode upon receiving a first cancellation instruction for the first selection instruction; and
   setting the target power supply mode as the default charging mode upon receiving a second cancellation instruction for the second selection instruction.

4. The method according to claim 2, wherein the step of determining the target power supply mode for the target device comprises:

   acquiring, when the target device is being charged, an interface output power of a connector, and recording, within a preset duration, a duration in which the interface output power is less than or equal to a minimum output power; and
   setting, when the duration is greater than the preset duration, the target power supply mode as the default power supply mode.

5. The method according to claim 2, further comprising:

   making, when the target power supply mode is the default charging mode, a first interactive feedback;
   making, when the target power supply mode is the first protecting mode, a second interactive feedback; and
   making, when the target power supply mode is the second protecting mode, a third interactive feedback.

6. A charging device, comprising: a charging protocol controller, a boost-buck regulator and a connector; wherein:

   the boost-buck regulator is respectively connected with an input power source, the charging protocol controller and the connector, and is configured to adjust and output to a target device through the connector, voltage and current of the input power source under the control of the charging protocol controller;
   the charging protocol controller is connected with the target device through the connector, and is configured to acquire a maximum charging power for protocol handshaking with the target device through the connector, and determine a target power supply mode for the target device; and
   the charging protocol controller is configured to control, when the target power supply mode is a first protecting mode, the boost-buck regulator to charge the target device with a first charging power and a second charging power alternately; wherein the first charging power is less than or equal to the maximum charging power; and the second charging power is less than the first charging power.

7. The device according to claim 6, wherein the charging protocol controller is configured to control, when the target power supply mode is a default charging mode, the boost-buck regulator to charge the target device with the continuous maximum charging power; and

the charging protocol controller is configured to control, when the target power supply mode is a second protecting mode, the boost-buck regulator to charge the target device with a continuous third charging power; wherein the third charging power is less than the maximum charging power.

8. The device according to claim 7, wherein an initial value of the target power supply mode is the default charging mode; the device further comprises an interactive unit and a microprocessor; the microprocessor is respectively connected with the interactive unit and the charging protocol controller;

the microprocessor is configured to send, upon receiving a first selection instruction from the interactive unit, a first protection notice to the charging protocol controller, and the charging protocol controller is configured to set the target power supply mode as a first protecting mode;

the microprocessor is configured to send, upon receiving a second selection instruction from the interactive unit, a second protection notice to the charging protocol controller, and the charging protocol controller is configured to set the target power supply mode as a second protecting mode;

the microprocessor is configured to send, upon receiving a first cancellation instruction for the first selection instruction from the interactive unit, a first cancellation notice to the charging protocol controller, and the charging protocol controller is configured to set the target power supply mode as the default charging mode; and

the microprocessor is configured to send, upon receiving a second cancellation instruction for the second selection instruction from the interactive unit, a second cancellation notice to the charging protocol controller, and the charging protocol controller is configured to set the target power supply mode as the default charging mode.

9. The device according to claim 8, wherein the charging protocol controller is configured to acquire and send to the microprocessor, when the target device is being charged, an interface output power of the connector, and the microprocessor is configured to record, within a preset duration, a duration in which the interface output power is less than or equal to a minimum output power; and

the microprocessor is configured to send, when the duration is greater than the preset duration, a default power supply notice to the charging protocol controller, and the charging protocol controller is configured to set the target power supply mode as the default power supply mode.

10. The device according to claim 8, wherein the device further comprises an interactive feedback unit; the microprocessor is connected with the interactive feedback unit;

the microprocessor is configured to control, when the target power supply mode is the default charging mode, the interactive feedback unit to make a first interactive feedback;

the microprocessor is configured to control, when the target power supply mode is the first protecting mode, the interactive feedback unit to make a second interactive feedback; and

the microprocessor is configured to control, when the target power supply mode is the second protecting mode, the interactive feedback unit to make a third interactive feedback.

Acquiring a maximum charging power for protocol handshaking with a target device, and determining a target power supply mode for the target device — S110

Charging, when the target power supply mode is a first protecting mode, the target device with alternating first charging power and second charging power; wherein the first charging power is less than or equal to the maximum charging power; and the second charging power is less than the first charging power — S120

Fig. 1

Charging, when the target power supply mode is a default charging mode, the target device with the continuous maximum charging power — S130

Charging, when the target power supply mode is a second protecting mode, the target device with a continuous third charging power; wherein the third charging power is less than the maximum charging power — S140

Fig. 2

Fig. 3

Fig. 4

```
                    ( Power On )
                         │
                         ▼
        ┌──────────────────────────────────────┐
   ┌───▶│       Microprocessor Loading          │◀──────────┐
   │    │            Default Mode               │           │
   │    │  to Execute Charging Program A         │           │
   │    └──────────────────────────────────────┘           │
   │                     │                                   │
   │                     ▼                                   │
   │            ┌──────────────────┐                         │
   │            │    LED Light     │                         │
   │            │ Displayed in Blue │                        │
   │            └──────────────────┘                         │
   │                     │                                   │
   │                     ▼                                   │
   │            ┌──────────────────────┐                     │
   │            │  Charging Protocol    │                    │
   │            │ Controller Full Charging │                 │
   │            │ Protocol DCP 5V/1.5A, │                    │
   │            │ PD 5V/3A,9V/3A,12V/2.5A │                  │
   │            └──────────────────────┘                     │
   │      NO              │                                  │
   │            ┌──────────────────────┐                     │
   │◀───────────│   Whether User        │                   │
   │            │   Presses Key to      │                   │
   │            │ Switch Charging Mode? │                   │
   │            └──────────────────────┘                     │
   │                     │ YES                               │
```

**EUROPEAN SEARCH REPORT**

Application Number

EP 24 22 2938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 054 728 A (LENOVO BEIJING CO LTD) 29 June 2021 (2021-06-29) * the whole document * ----- | 1,2,5-7, 10 | INV. H02J7/00 |
| A | US 2015/249354 A1 (LIM CHEOW GUAN [SG] ET AL) 3 September 2015 (2015-09-03) * abstract; figures 1, 2 * * paragraphs [0034] - [0044] * ----- | 6 | |

TECHNICAL FIELDS
SEARCHED (IPC)

H02J

The present search report has been drawn up for all claims

| Place of search | Date of completion of the search | Examiner |
|---|---|---|
| Munich | 16 May 2025 | Hartmann, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 2938

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| CN 113054728 | A | 29-06-2021 | NONE | | |
| US 2015249354 | A1 | 03-09-2015 | CN | 104883205 A | 02-09-2015 |
| | | | DE | 102015102661 A1 | 03-09-2015 |
| | | | US | 2015249354 A1 | 03-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411596241